# EUROPÄISCHE PATENTSCHRIFT

(11) **EP 1 316 711 B1**
(45) Veröffentlichungstag und Bekanntmachung des Hinweises auf die Patenterteilung: **01.06.2005**
(21) Anmeldenummer: 02023584.2
(22) Anmeldetag: 23.10.2002
(51) Int. Cl.: F02F 7/00, F01M 1/02, F02B 67/06, F01L 1/02, F01M 11/00

(54) **Brennkraftmaschine**
Internal combustion engine
Moteur à combustion interne

(30) Priorität: 01.12.2001 DE 10159087
(43) Veröffentlichungstag der Anmeldung: 04.06.2003
(73) Patentinhaber: Dr.Ing. h.c.F. Porsche Aktiengesellschaft, 70435 Stuttgart (DE)
(72) Erfinder: Maier, Frank, 71287 Weissach (DE)

(56) Entgegenhaltungen:
- US-A- 5 078 106
- US-A- 5 190 005
- US-A- 5 191 859
- US-A- 5 791 311

## Beschreibung

Die Erfindung geht aus von einer Brennkraftmaschine nach den Merkmalen des Oberbegriffs des Anspruchs 1.

Bei der Druckumlaufschmierung für eine Brennkraftmaschine ist es bekannt, die dafür erforderliche Druckölförderpumpe unterhalb der Kurbelwelle in einem Ölführungsgehäuse bzw. in der Ölwanne anzuordnen (siehe z. B. Fachkunde Kraftfahrzeugtechnik, Seite 323 ff., Verlag Europa - Lehrmittel, 26. Auflage oder US 5 078 106). Der Antrieb der Druckölförderpumpe erfolgt vorzugsweise mit Hilfe eines von der Kurbelwelle angetriebenen Kettentriebes.

Problematisch ist, dass die Antriebskette bzw. das Antriebszahnrad für die Druckölförderpumpe teilweise in den Ölsumpf eintaucht und somit das Öl von der Antriebskette mitgerissen wird. Das von der Kette mitgeführte Schmieröl führt zu einer unerwünschten Ölverschäumung im Kurbelgehäuse; dieses Problem setzt sich im Zylinderkopfgehäuse fort, wenn das Schmieröl über eine die Nockenwellen im Zylinderkopfgehäuse antreibende Steuerkette weitergeleitet wird.

Aufgabe der Erfindung ist es daher, zu verhindern, dass das von der Antriebskette der Ölpumpe mitgerissene Schmieröl aus dem Ölsumpf in den Kurbelraum bzw. in den Zylinderkopf der Brennkraftmaschine gelangt.

Die Lösung der Aufgabe erfolgt durch die im Anspruch 1 angegebenen Merkmale.

Durch eine mit Mitteln zum Abstreifen bzw. Abscheiden des von der Kette mitgeführten Schmieröls versehene Kettenradabdeckung der Druckölförderpumpe wird sicher gestellt, dass das von der Antriebskette mitgerissene bzw. mitgeführte Schmieröl wieder zurück in den Ölsumpf bzw. nicht in das Kurbelgehäuse oder das Zylinderkopfgehäuse gelangt.

In den Unteransprüchen sind weitere vorteilhafte Ausgestaltungen und Verbesserungen der erfindungsgemäßen Brennkraftmaschine enthalten.

Die Kettenradabdeckung ist in vorteilhafter Weise im Bereich der Kettenführung mit Öffnungen versehen, deren Ränder als Ölabstreifkanten für das Schmieröl vorgesehen sind.

Die Kettenradabdeckung ist topfförmig ausgebildet und mit einer umlaufenden Seitenwand versehen, in der die mit den Ölabstreifkanten versehenen Öffnungen eingebracht sind.

In vorteilhafter Weise ist durch einen Teil der mit Ölabstreifkanten versehenen Öffnungen die umlaufende Antriebskette hindurchgeführt.

Ein Ausführungsbeispiel der Erfindung ist in der nachfolgenden Beschreibung und Zeichnung näher erläutert.

Es zeigen
- Fig. 1: eine Perspektivansicht eines Teils einer Brennkraftmaschine mit einem Ölpumpenantrieb,

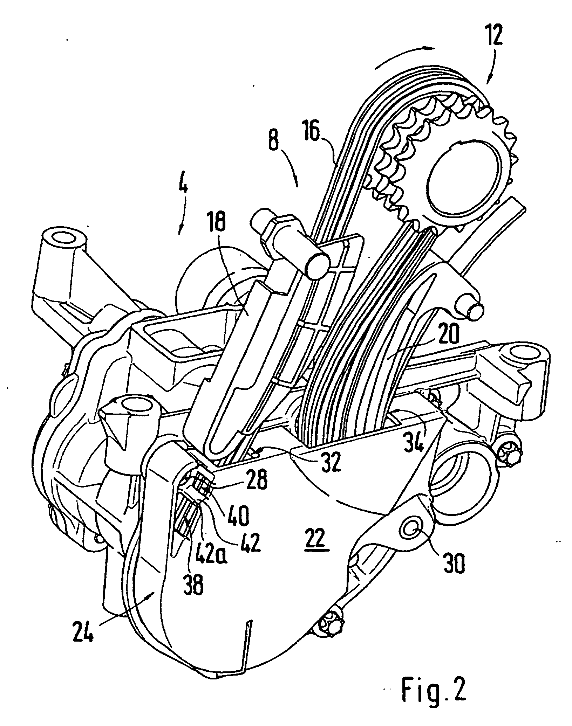

- Fig. 2: eine vergrößerte Darstellung der Ölpumpe mit einer Kettenradabdeckung und

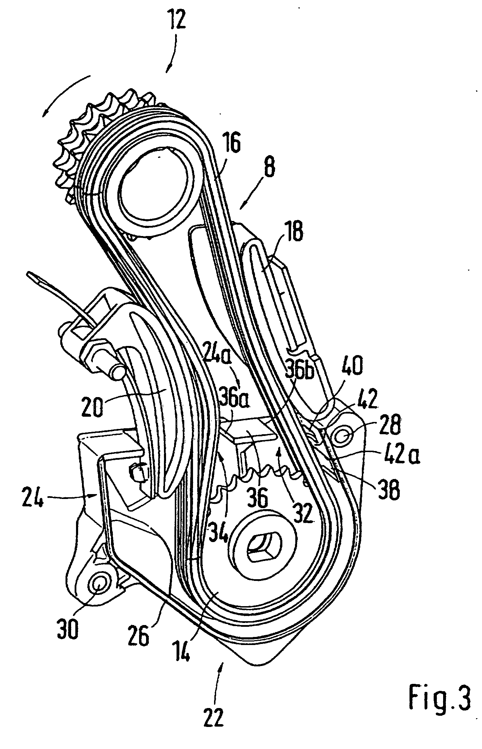

- Fig. 3: eine Innenansicht von der Kettenradabdeckung.

### Beschreibung des Ausführungsbeispiels

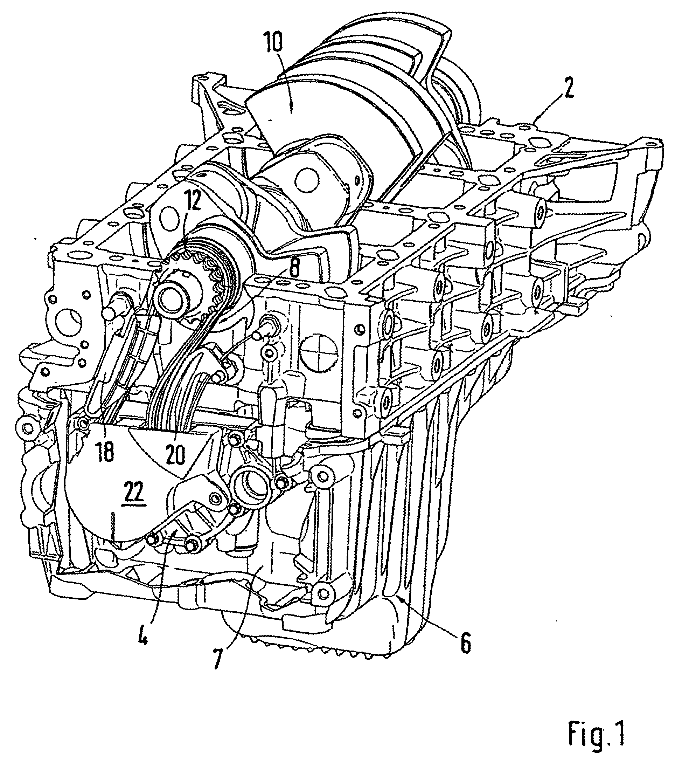

An einem Kurbelgehäuseunterteil 2 ist eine Öldruckförderpumpe 4 für die Schmierölversorgung der Brennkraftmaschine befestigt. Wie aus der Schnittdarstellung in Fig. 1 ersichtlich, ist die Ölpumpe 4 in einem Ölführungsgehäuse 6 angeordnet, das ebenfalls am am Kurbelgehäuseunterteil 2 befestigt ist. Im Ölführungsgehäuse 6 ist zur Schmierölversorgung der Hauptlager der Kurbelwelle 10, der Pleuellager etc. ein Ölsumpf 7 ausgebildet. Zum Antrieb der Ölpumpe ist ein Kettentrieb 8 vorgesehen, der aus einem auf einer Kurbelwelle 10 angebrachten Antriebszahnrad 12, einem auf der Antriebswelle der Ölpumpe 4 befestigten Kettenrad 14 und einer, beide Zahnräder 12, 14 umschlingenden und als Endlostrieb ausgebildeten Antriebskette 16 besteht. Das Antriebszahnrad 12 ist als Dreifach- Zahnrad ausgebildet, wobei die beiden nicht von der Antriebskette 16 umschlungenen Zahnräder zum Antrieb von im Zylinderkopfgehäuse der Brennkraftmaschine angeordneten Nockenwellen mittels einer Duplex- Steuerkette (Bauteile sind in der Zeichnung nicht dargestellt) dienen. Die Antriebskette 16 wird auf ihrem Lasttrum (Drehrichtung der Kurbelwelle im Uhrzeigersinn) von einer Kettenführungsschiene 18 begrenzt, während auf der Lostrum - Seite eine Kettenspannerschiene 20 angeordnet ist. Das die Ölpumpe 4 antreibende Kettenrad 14 ist mit einer Kettenradabdeckung 22 versehen, die im wesentlichen bis an die Flanschfläche Ölpumpe 4 - Kurbelgehäuseunterteil 2 heranreicht. Die beispielsweise aus einem Aluminium - Druckgussteil hergestellte Kettenradabdeckung 22 weist eine umlaufende Seitenwandung 24 auf, deren Stirnseite 26 im montierten Zustand an einer Gehäusefläche der Ölpumpe 4 anliegt. Die Gehäusefläche (nicht dargestellt) ist mit einer umlaufenden Nut versehen, in die die mit einem Steg versehene Stirnseite 26 der Seitenwandung nach dem Nut-Feder-Prinzip eingreift. Zur Befestigung der Kettenradabdeckung 22 am Ölpumpengehäuse sind zwei Befestigungsaugen 28 und 30 vorgesehen. Eine obere Wandseite 24a der umlaufenden Seitenwandung 24 weist zwei rechteckförmige Öffnungen 32 und 34 auf, wobei durch die Öffnung 32 der Lasttrum der Antriebskette 16 und durch die Öffnung 34 der Lostrum der Antriebskette 16 hindurchgeführt ist. In der Öffnung 34 findet weiterhin einer Teil der Kettenspannerschiene 20 Aufnahme. Zwischen den beiden Öffnungen 32 und 34 ist ein Mittelsteg 36 herausgebildet, dessen linke und rechte Begrenzungskante 36a und 36b als Ölabstreifkanten für das von der Antriebskette 16 aus dem Ölführungsgehäuse 6 bzw. dem Ölsumpf 7 mitgeführten Schmieröls vorgesehen sind.

Im Bereich des Befestigungsauges 28 sind in der Seitenwandung 24 zwei weitere rechteckförmige Öffnungen 38 und 40 vorgesehen. Beide Öffnungen 38, 40 sind durch einen Steg 42 voneinander getrennt, wobei insbesondere die untere Begrenzungskante 42a des Steges 42 ebenfalls als Ölabstreifkante für das von der Antriebskette 16 in Richtung des Kurbelgehäuses 2 mitgeführten Schmieröls wirkt. Das von den Ölabstreifkanten 36a, 36b und 42a abgestreifte Schmieröl gelangt wieder in den Ölsumpf 7 zurück oder trifft wieder auf die Antriebskette 16, wobei es an den Ölabstreifkanten 36a, 36b bzw. 42a erneut "abgehobelt" wird und somit nicht in das Kurbelgehäuse oder die Zylinderköpfe der Brennkraftmaschine gelangt.

## Patentansprüche

1. Brennkraftmaschine mit einem Kurbelgehäuse (2), in dem eine Kurbelwelle Aufnahme findet, sowie mit einem unterhalb des Kurbelgehäuses angeordneten Ölführungsgehäuse (6), in dem zur Schmierölversorgung eine mit einem Antriebskettenrad (14) versehene Ölpumpe (4) angeordnet ist, die aus einem im Ölführungsgehäuse (6) ausgebildeten Ölsumpf (7) Schmieröl zu den Verbrauchern fördert, **dadurch gekennzeichnet, dass** das Kettenrad (14) von einer Abdeckung (22) umschlossen ist und dass an der Kettenradabdeckung (22) Mittel (36a, 36b, 42a) zum Abstreifen/Abscheiden von Schmieröl vorgesehen sind, das von einer das Kettenrad (14) antreibenden Kette (16) aus dem Ölsumpf (7) in Richtung des Kurbelgehäuses (2) mitgeführt wird.

2. Brennkraftmaschine nach Anspruch 1, **dadurch gekennzeichnet, dass** die Kettenradabdeckung (22) Öffnungen (32, 34, 38, 40) aufweist, deren Ränder (36a, 36b, 42a) als Ölabstreifkanten ausgebildet sind.

3. Brennkraftmaschine nach Anspruch 2, **dadurch gekennzeichnet, dass** die mit Ölabstreifkanten versehenen Öffnungen (32, 34, 38, 40) in einer umlaufenden Seitenwandung (24) der Kettenradabdeckung (23) eingebracht sind.

4. Brennkraftmaschine nach einem der vorhergehenden Ansprüche, **dadurch gekennzeichnet, dass** durch einen Teil der Öffnungen (32,34) die umlaufende Antriebskette (16) hindurchgeführt ist.

## Claims

1. An internal-combustion engine with a crankcase (2) in which a crankshaft is received, and with an oil-conveying housing (6) which is arranged below the crankcase and in which an oil pump (4) is arranged for the supply of lubricating oil, the oil pump (4) being provided with a driving chain wheel (14) and conveying lubricating oil to the consumer devices from an oil sump (7) which is formed in the oil-conveying housing (6), **characterized in that** the chain wheel (14) is surrounded by a cover (22), and means (36a, 36b, 42a) are provided on the chain-wheel cover (22) for scraping off / separating lubricating oil which is entrained from the oil sump (7) in the direction towards the crankcase (2) by a chain (16) which drives the chain wheel (14).

2. An internal-combustion engine according to Claim 1, **characterized in that** the chain-wheel cover (22) has openings (32, 34, 38, 40), the edges (36a, 36b, 42a) of which are designed in the form of oil-scraping edges.

3. An internal-combustion engine according to Claim 2, **characterized in that** the openings (32, 34, 38, 40) provided with oil-scraping edges are formed in a continuous lateral wall (24) of the chain-wheel cover (22).

4. An internal-combustion engine according to one of the preceding Claims, **characterized in that** the continuous driving chain (16) passes through part of the openings (32, 34).

## Revendications

1. Moteur à combustion interne avec un carter moteur (2) dans lequel est logé un vilebrequin, ainsi qu'avec un carter de guidage d'huile (6) disposé au-dessous du carter moteur dans lequel est prévue, pour l'alimentation en huile de lubrification, une pompe à huile (4) pourvue d'une roue pour chaîne d'entraînement (14), laquelle pompe à huile transporte l'huile de lubrification depuis une cuve à huile (7) réalisée dans le carter de guidage d'huile (6), vers les récepteurs, **caractérisé en ce que** la roue pour chaîne (14) est enfermée par un capot (22) et **en ce que** sur le capot (22) de la roue pour chaîne sont prévus des moyens (36a, 36b, 42a) pour le raclage/séparation de l'huile de lubrification qui est entraînée par une chaîne (16), entraînant la roue pour chaîne (14), depuis la cuve à huile (7) en direction du carter moteur (2).

2. Moteur à combustion interne selon la revendication 1, **caractérisé en ce que** le capot (22) de la roue pour chaîne présente des ouvertures (32, 34, 38, 40) dont les bords (36a, 36b, 42a) sont réalisés comme bords de raclage d'huile.

3. Moteur à combustion interne selon la revendication 2, **caractérisé en ce que** les ouvertures (32, 34, 38, 40), pourvues de bords de raclage d'huile, sont pratiquées dans une paroi latérale (24) périphérique du capot (22) de la roue pour chaîne.

4. Moteur à combustion interne selon l'une des revendications précédentes, **caractérisé en ce que** la chaîne d'entraînement (16) en circulation est guidée à travers une partie des ouvertures (32, 34).
